# FASCICULE DE BREVET EUROPEEN

(11) **EP 2 841 259 B1**
(45) Date de publication et mention de la délivrance du brevet: **30.10.2019**
(21) Numéro de dépôt: 13723866.3
(22) Date de dépôt: 24.04.2013
(51) Int. Cl.: B29C 70/88

(54) **PIECE COMPOSITE COMPRENANT UN DISPOSITIF DE RENFORT DESTINE A AMELIORER LE COMPORTEMENT D'AU MOINS UNE PARTIE DE LADITE PIECE COMPOSITE**
VERBUNDTEIL, UMFASSEND EINE VERSTÄRKUNGSVORRICHTUNG ZUR VERBESSERUNG DES VERHALTENS MINDESTENS EINES TEILS DIESES VERBUNDTEILS
COMPOSITE PART COMPRISING A REINFORCEMENT DEVICE FOR IMPROVING THE BEHAVIOR OF AT LEAST A PORTION OF SAID COMPOSITE PART

(30) Priorité: 24.04.2012 FR 1253773
(43) Date de publication de la demande: 04.03.2015
(73) Titulaire: SKF Aerospace France, 26240 Saint Vallier (FR)
(72) Inventeur: VALEMBOIS, Guy, F-31650 Lauzerville (FR)
(74) Mandataire: Rhein, Alain
(86) Numéro de dépôt international: PCT/FR2013/050913
(87) Numéro de publication internationale: WO 2013/160616

(56) Documents cités:
- WO-A1-85/03988
- WO-A1-2005/023526
- WO-A1-2008/132498
- FR-A1- 2 764 671
- US-A- 3 056 706

## Description

La présente invention a pour objet, dans le domaine des pièces réalisées en matériau composite constitué de fibres de renfort noyées dans une résine, une pièce en matériau composite comprenant un dispositif de renfort destiné à améliorer le comportement d'au moins une partie d'une pièce lorsque cette dernière est soumise à une sollicitation due à la transmission d'un effort, et plus particulièrement au niveau de la zone servant à ladite transmission, et lorsque ledit effort se situe dans le plan de drapage des fibres de renfort que comporte ladite pièce.

De manière habituelle, une pièce en matériau composite est constituée d'une superposition de plis composites comprenant chacune des fibres de renfort noyées dans une matrice thermoplastique ou thermodurcissable, communément appelée résine. L'orientation des fibres est de préférence choisie en fonction de la direction de la sollicitation de la pièce, tandis que la forme des pièces vient de moulage.

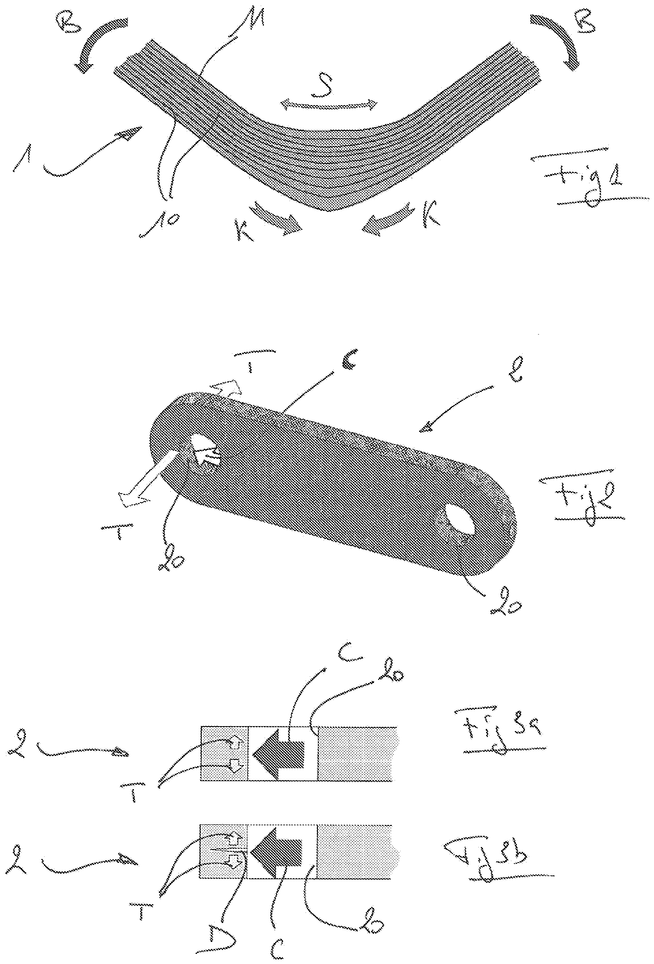

Certaines pièces présentent des portions faisant entre-elles un angle venant de moulage, et les fibres qui composent ces pièces suivant la même angulation. On a représenté sur la figure 1 la partie d'une telle pièce composite 1 faisant en angle, et composée de plis de fibres 10 noyées dans une résine 11. Lorsque la pièce 1 est soumise à un effort B en dépliage, cela génère une mise en traction axiale S des fibres 10 du côté interne de l'angle et une compression axiale K des fibres 10 du côté externe, avec pour conséquence une sollicitation de la résine 11 qui lie les plis de fibres 10 et donc un risque de délaminage.

Un inconvénient similaire est rencontré dans le cas d'une pièce en matériau composite associée à une autre pièce au travers d'une liaison en vue de la transmission d'un effort. Une telle pièce peut, non limitativement, consister en une bielle ou analogue, obtenue par la superposition de plis composites, et comportant à chacune de ses extrémités un alésage formant l'œilleton destiné à la réalisation de la liaison avec une autre pièce, ledit alésage étant préférentiellement d'axe perpendiculaire aux plans desdits plis.

Sur la figure 2 est représentée une telle bielle 2, laquelle comporte deux alésages 20, un à chacune de ses extrémités, en vue permettre la réalisation d'une liaison avec une autre pièce, non représentée, en sorte que ladite bielle 2 soit sollicitée en traction ou en compression dans un sens parallèle aux plans des plis dont est faite la bielle 2.

Lorsqu'il y a rupture à la suite de la transmission d'un effort, on constate que cette rupture se produit au niveau des zones d'interface.

Sur les figures 3a et 3b, qui représentent des coupes selon un plan longitudinal médian de la bielle 2 au niveau d'un alésage 20, on peut voir que le mode de ruine est le suivant : le matage local au niveau de l'alésage 20 produit une compression C dans la direction radiale de l'alésage 20, soit directement dans la direction des plis de composite. Cette compression C induit de la traction T dans la direction orthogonale, soit perpendiculaire aux plis composites. La résine supporte donc directement cette sollicitation de traction S. La présence des fibres composites n'aide en rien la résistance locale à cette sollicitation de traction de la résine, ce qui conduit à un délaminage D des plis composites.

Ce délaminage provoque le flambage local des fibres composites qui sont sollicitées en compression locale, provoquant la ruine de la pièce.

On notera qu'il est possible de garnir intérieurement l'alésage 10 d'un insert qui consiste en un élément, en métal par exemple, cependant cela ne modifie pas le mode de ruine, car l'insert ne modifie pas l'équilibre local des contraintes.

Pour remédier à l'ensemble des inconvénients précités, il est possible d'utiliser la technique de couture qui consiste à réaliser au niveau notamment des zones susceptibles d'être sollicitées, un entrelacement de fibres de renfort traversant perpendiculairement la superposition de plis, en sorte de contenir une éventuelle séparation desdits plis.

Cette technique a toutefois des limites car la mise en compression n'est que locale et donc introduit des concentrations de contraintes qui induisent une mise en compression non homogène, laissant des zones en sous chargement de compression, donc susceptibles de présenter un départ de délaminage propre à provoquer la ruine de la pièce.

Des documents, tels que WO 85/03988 et FR 2 764 671, décrivent des éléments de renforts assurant la compression d'une zone de la pièce en matériau composite, cette zone et ce dit élément de renfort n'étant toutefois pas conçus pour assurer la liaison avec une autre pièce.

La présente invention a pour but de proposer, dans le domaine des pièces composites destinée à être soumises à la transmission d'un effort, une pièce en matériau composite comprenant un dispositif de renfort de la zone servant à la transmission dudit effort.

Le dispositif de renfort de la zone servant à la transmission d'un effort, d'une pièce en matériau composite constitué de fibres de renfort noyées dans une résine, lorsque ledit effort se situe dans le plan de drapage des fibres de renfort que comporte ladite pièce, selon l'invention, se caractérise essentiellement en ce qu'il comprend d'une part deux éléments destinés à enserrer ladite pièce composite au niveau de ladite zone ou au voisinage de celle-ci, et d'autre part au moins un corps de liaison, qui relie lesdits deux éléments d'enserrement avec une précontrainte en sorte de générer une compression au niveau de ladite partie, et en ce qu'au moins l'un desdits corps de liaison est conçu apte à permettre sa solidarisation avec une autre pièce en vue de la transmission d'un effort

Le dispositif de renfort permet une mise en compression de la partie de la pièce composite destinée à être sollicitée, c'est-à-dire mettre la résine en précontrainte ce qui augmente la tenue de la pièce.

Selon une caractéristique additionnelle du dispositif de renfort, le corps de liaison traverse les plis perpendiculairement aux plans de ceux-ci, pour relier les éléments d'enserrement.

Selon une autre caractéristique additionnelle du dispositif de renfort, il comporte plusieurs corps de liaison, régulièrement répartis.

La multiplication des corps de liaison et leur répartition permettent l'homogénéisation de la mise en compression de la partie enserrée, ce qui accroît la tenue mécanique de la pièce composite.

Selon un mode de réalisation particulier du dispositif de renfort, les éléments d'enserrement consistent en des plaques percées de trous permettant le passage de corps de liaison, lesquels consistent en des moyens de serrage.

Les moyens serrage peuvent consister en des éléments filaires passant dans les trous des plaques en traversant la matière composite à la manière d'une couture, ou bien des vis, des rivets etc...

Selon un mode de réalisation particulier du dispositif de renfort, le corps de liaison déborde extérieurement les deux éléments d'enserrement pour former des points d'accrochage pour la transmission d'un effort.

Selon une autre caractéristique additionnelle du dispositif de renfort, le corps de liaison est tubulaire en sorte de pouvoir être traversé axialement par un moyen de fixation à une autre pièce en vue de la transmission de l'effort.

On obtient un blocage du déplacement transversal à l'effort entrant dans la pièce composite. La compression locale est transformée par l'effet des blocages en compression perpendiculaire aux plis composites du fait des effets de POISSON. La résistance de la résine se trouve consolidée car elle travaille dans un mode plus proche de la compression hydrostatique.

Selon une caractéristique additionnelle du dispositif de renfort, les deux éléments d'enserrement sont assujettis au corps tubulaire au travers de moyens d'assemblage aptes à assurer une résistance aux efforts axiaux qui tendent à écarter lesdits deux éléments d'enserrement.

Selon une autre caractéristique additionnelle du dispositif de renfort, le moyen d'assemblage consiste en un moyen d'assemblage par encliquetage, par rivetage, par brasage ou par collage.

Selon une autre caractéristique additionnelle du dispositif de renfort, le moyen d'assemblage consiste en un moyen d'assemblage par vissage.

Selon un mode de réalisation particulier du dispositif de renfort, les deux éléments d'enserrement consistent en des rondelles.

Selon un mode de réalisation préférentiel du dispositif de renfort, le corps tubulaire comporte à chacune de ses extrémités, ou à proximité de celles-ci, un filetage, tandis que l'alésage de chacune des rondelles présente un taraudage.

Le montage du dispositif de renfort se fait sur la pièce composite par serrage des rondelles. Ce serrage garantit une précontrainte favorable à la mise en compression des plis composites.

De manière avantageuse, un collage, réalisé simultanément au vissage, permet de consolider l'ensemble tout en évitant tout desserrage des rondelles.

Egalement de manière avantageuse, les rondelles comportent extérieurement des empreintes permettant leur préhension au moyen d'un outil de serrage.

On notera que de manière induite, le dispositif de renfort présente l'avantage de protéger la zone de la pièce composite des impacts susceptibles de réduire son niveau de performance.

La présente demande a pour objet, une pièce en matériau composite constituée de fibres de renfort noyées dans une résine, et dont au moins une partie est équipée d'un dispositif de renfort tel que défini précédemment.

L'invention a notamment pour but d'améliorer la tenue d'une pièce composite lorsque celle-ci est utilisée pour la transmission d'un effort au niveau de la zone servant à ladite transmission lorsque ledit effort se situe dans le plan de drapage des fibres de renfort que comporte ladite pièce.

Les avantages et les caractéristiques du dispositif de renfort, ressortiront plus clairement de la description qui suit et qui se rapporte au dessin annexé, lequel en représente un mode de réalisation non limitatif.

Dans le dessin annexé:
- la figure 1 représente une vue schématique partielle illustrant la sollicitation d'une pièce composite.
- la figure 2 représente une vue schématique en perspective une pièce composite susceptible de recevoir des dispositifs de renfort.
- les figures 3a et 3b représentent des vues partielles en coupe selon un plan longitudinal médian de la pièce composite de la figure 1.
- la figure 4 une vue schématique en perspective d'un mode de réalisation particulier du dispositif de renfort.
- la figure 5 représente une vue schématique en coupe selon un plan axial médian, et en éclaté du même mode de réalisation particulier dispositif de renfort.
- la figure 6 représente une vue schématique partielle en coupe selon un plan longitudinal médian de la pièce composite de la figure 1 équipée du dispositif de renfort.
- la figure 7 représente la même vue de la même pièce composite équipée d'une variante du dispositif de renfort.
- la figure 8 représente une vue schématique en perspective de la pièce composite de la figure 1 équipée de dispositifs de renfort.
- la figure 9 représente une vue schématique en perspective d'une autre pièce composite équipée d'un dispositif de renfort.

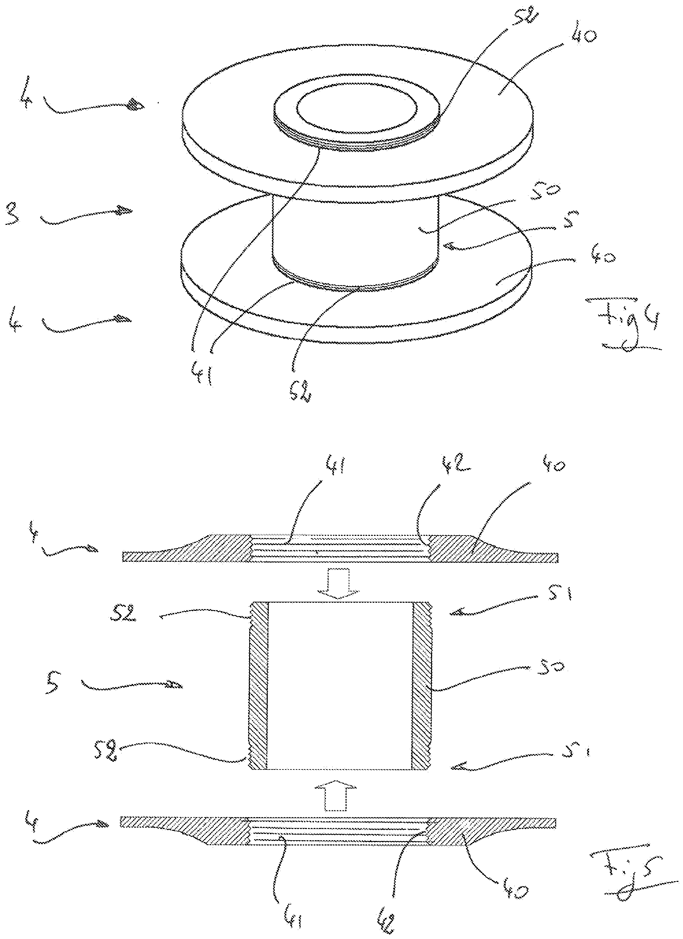

En référence aux figures 4 et 5, on peut voir un dispositif de renfort 3, dans un mode de réalisation particulier, destiné à contribuer à la transmission d'un effort.

Ce dispositif de renfort 3 est destiné à équiper une pièce composite telle que la bielle 2 par exemple, il comporte deux éléments d'enserrement 4 qui consistent en des rondelles 40, et un corps de liaison 5 se présentant sous la forme d'un tube 50. Le tube 50 comporte à chacune de ses extrémités 51, un filetage 52, tandis que les alésages 41 des rondelles 40 comportent un taraudage 42, non visible sur la figure 4. L'assemblage des rondelles 40 au tube 50 par vissage, donne au dispositif de renfort 3 une forme de bobine.

On notera que le tube 50 et les rondelles 40 sont de préférence réalisés en métal.

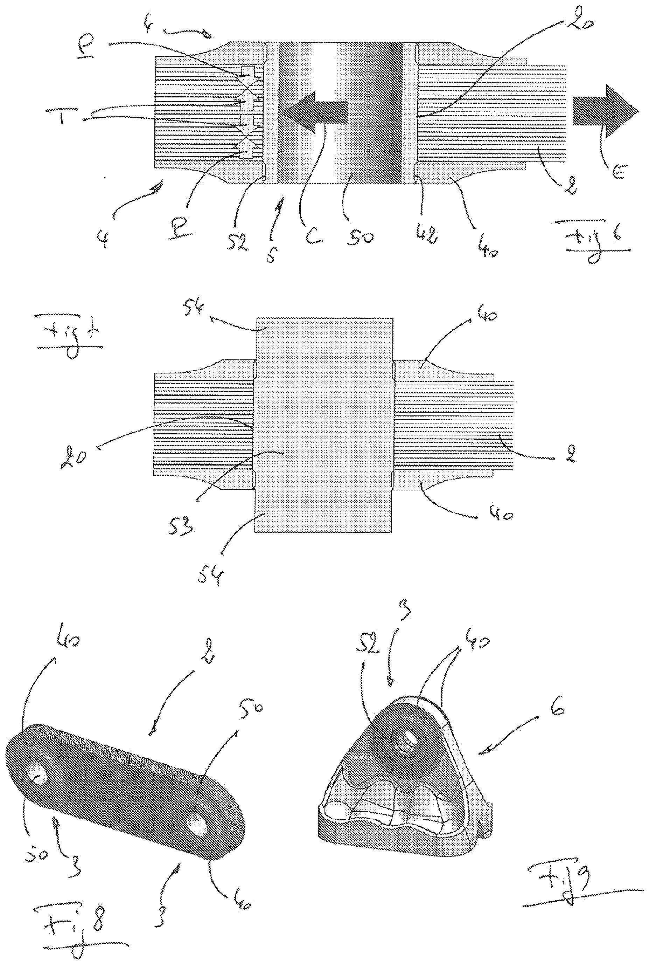

Comme on peut le voir sur la figure 6, le tube 50 est destiné à prendre place, de préférence étroitement, dans l'alésage 20 d'une pièce composite telle qu'une bielle 2, tandis que les rondelles 40 sont destinées à être vissées sur les extrémités du tube 50 jusqu'à enserrer la bielle 2 dans la zone bordant périphériquement l'alésage 20.

On notera que les caractéristiques dimensionnelles des parties filetées sont adaptées à permettre la réalisation d'un tel enserrement, et que de préférence on utilise un pas fin.

On peut constater que lorsque la pièce composite 2 est soumise à un effort axial E, au travers par exemple d'un arbre de liaison engagé dans le tube 50, la compression C, générée par cet effort E au niveau du tube 50, crée une traction T perpendiculaire aux plis formant la pièce composite, laquelle traction T est contenue par la pression P exercée par les rondelles 40.

Il y a lieu de noter que la solidarisation des rondelles 40 au tube 50 par un procédé de vissage n'est pas limitative, car il est possible d'utiliser d'autre procédés de fixation, par encliquetage, sertissage, collage, brasage etc...

En référence maintenant à la figure 7, on peut voir une variante, où le tube 50 est remplacé par un arbre 53, d'une longueur telle que ses extrémités 54 puissent déborder les rondelles 40, en sorte de constituées des moyens de fixation, par exemple à une chape, non représentée.

En référence aux figures 8 et 9 on peut voir deux pièces en matériau composite selon l'invention à savoir respectivement, une bielle 2 et une ferrure 6, dont les alésages, destinés à la réalisation d'une liaison avec une autre pièce, sont chacun équipés d'un dispositif de renfort 3 permettant d'éviter le délaminage de la matière composite.

De manière avantageuse, le dispositif de renfort 3 présente un autre avantage, en effet comme cela est visible sur les figures 8 et 9, il est possible de dimensionner les rondelles 40 en sorte qu'elles couvrent l'ensemble de la zone de reprise d'effort de la pièce composite, 2 et 6, c'est-à-dire jusqu'au moins une partie du bord extrême, permettant ainsi d'en réaliser la protection, contre des impacts par exemple.

On notera qu'il est également possible, dans le but d'éviter un délaminage du bord d'une pièce composite, de prévoir des corps de liaison joignant les éléments d'enserrement, extérieurement à la pièce composite, de préférence au contact de celle-ci, en sorte de former par exemple une gouttière, logeant le bord, ou du moins une partie du bord, de la pièce composite.

La présente invention permet non seulement d'accroître la longévité des pièces en matériau composite, mais elle permet également d'envisager de réduire l'épaisseur nécessaire de matière composite, et donc malgré le poids des dispositifs de renfort 3, de réduire la masse globale de la pièce.

## Revendications

1. Pièce en matériau composite (1; 2; 6) réalisée en un matériau composite constitué d'une superposition de plis composites comprenant chacun des fibres de renfort (10) noyées dans une résine (11), ladite pièce comprenant une zone qui comporte un alésage (20), d'axe perpendiculaire aux plans desdits plis, ladite pièce comprenant au niveau de ladite zone servant à la transmission d'un effort, un dispositif de renfort (3) comprenant d'une part deux éléments (4) d'enserrement de ladite pièce composite (2) au niveau de ladite partie ou au voisinage de celle-ci, et d'autre part au moins un corps de liaison (5) qui traverse lesdits plis perpendiculairement aux plans de ceux-ci par ledit alésage (20), pour relier lesdits deux éléments d'enserrement (4) qui, par leur serrage, mettent la résine en précontrainte, par la mise en compression desdits plis composites, ladite pièce étant **caractérisée en ce que** l'alésage forme un œilleton destiné à la réalisation d'une liaison avec une autre pièce en vue de la transmission d'un effort exercé dans le plan de drapage des fibres de renfort.

2. Pièce en matériau composite selon la revendication 1, **caractérisée en ce que** les éléments d'enserrement (4) consistent en des plaques (40; 41) percées de trous (43) permettant le passage de corps de liaison (5; 50; 51), lesquels consistent en des moyens de serrage.

3. Pièce en matériau composite selon l'une quelconque des revendications 1 à 2, **caractérisée en ce que** le corps de liaison (53) déborde extérieurement les deux éléments d'enserrement (4; 40) pour former des points d'accrochage (54) pour la transmission de l'effort.

4. Pièce en matériau composite selon l'une quelconque des revendications 1 à 2, **caractérisée en ce que** le corps de liaison (50) est tubulaire en sorte de pouvoir être traversé axialement par un moyen de fixation à une autre pièce en vue de la transmission de l'effort.

5. Pièce en matériau composite selon la revendication 3 ou la revendication 4, **caractérisée en ce que** les deux éléments d'enserrement (4 ; 40) sont assujettis au corps tubulaire (52) au travers de moyens d'assemblage (52, 41) aptes à assurer une résistance aux efforts axiaux qui tendent à écarter lesdits deux éléments d'enserrement (4; 40).

6. Pièce en matériau composite selon la revendication 6, **caractérisée en ce que** le moyen d'assemblage consiste en un moyen d'assemblage par vissage.

7. Pièce en matériau composite selon la revendication 5 ou la revendication 6, **caractérisée en ce que** les deux éléments d'enserrement (4) consistent en des rondelles (40).

8. Pièce en matériau composite selon la revendication 7, **caractérisée en ce que** le corps de liaison (5; 50 ; 53) comporte à chacune de ses extrémités, ou à proximité de celles-ci, un filetage (52), tandis que l'alésage (41) de chacune des rondelles (40) présente un taraudage (42).

9. Pièce en matériau composite selon la revendication 5, **caractérisée en ce que** le moyen d'assemblage consiste en un moyen d'assemblage par encliquetage, par rivetage, par brasage ou par collage encliquetage.

## Patentansprüche

1. Teil aus Verbundwerkstoff (1; 2; 6), das aus einem Verbundwerkstoff ausgeführt ist, der aus einer Überlagerung von Verbundlagen besteht, die jeweils Verstärkungsfasern (10) umfassen, die in ein Harz (11) eingebettet sind, wobei das Teil eine Zone umfasst, die eine Bohrung (20) mit einer senkrecht zu den Ebenen der Lagen verlaufenden Achse aufweist, wobei das Teil an der zur Übertragung einer Kraft dienenden Zone eine Verstärkungsvorrichtung (3) umfasst, die zum einen zwei Einspannelemente (4) zum Einspannen des Verbundteils (2) an dem Abschnitt oder in der Nähe davon umfasst und zum anderen mindestens einen Verbindungskörper (5), der die Lagen senkrecht zu deren Ebenen durch die Bohrung (20) durchdringt, um die beiden Einspannelemente (4) zu verbinden, die durch ihr Spannen das Harz durch Stauchen der Verbundlagen vorspannen, wobei das Teil **dadurch gekennzeichnet ist, dass** die Bohrung eine Öse bildet, die zur Ausführung einer Verbindung mit einem anderen Teil mit Blick auf die Übertragung einer in der Drapierungsebene der Verstärkungsfasern ausgeübten Kraft bestimmt ist.

2. Teil aus Verbundwerkstoff nach Anspruch 1, **dadurch gekennzeichnet, dass** die Einspannelemente (4) aus Platten (40; 41) bestehen, die mit Löchern (43) durchbohrt sind, die das Durchführen von Verbindungskörpern (5; 50; 51) ermöglichen, die aus Spannmitteln bestehen.

3. Teil aus Verbundwerkstoff nach einem der Ansprüche 1 bis 2, **dadurch gekennzeichnet, dass** der Verbindungskörper (53) außen über die beiden Einspannelemente (4; 40) übersteht, um Anschlagpunkte (54) zur Übertragung der Kraft zu bilden.

4. Teil aus Verbundwerkstoff nach einem der Ansprüche 1 bis 2, **dadurch gekennzeichnet, dass** der Verbindungskörper (50) rohrförmig ist, so dass er axial von einem Befestigungsmittel zur Befestigung an einem anderen Teil mit Blick auf die Übertragung der Kraft durchdrungen werden kann.

5. Teil aus Verbundwerkstoff nach Anspruch 3 oder Anspruch 4, **dadurch gekennzeichnet, dass** die beiden Einspannelemente (4; 40) an dem rohrförmigen Körper (52) über Verbindungsmittel (52, 41) befestigt sind, die geeignet sind, einen Widerstand gegen die axialen Kräfte zu gewährleisten, die dazu tendieren, die beiden Einspannelemente (4; 40) zu beabstanden.

6. Teil aus Verbundwerkstoff nach Anspruch 6, **dadurch gekennzeichnet, dass** das Verbindungsmittel aus einem Schraubverbindungsmittel besteht.

7. Teil aus Verbundwerkstoff nach Anspruch 5 oder Anspruch 6, **dadurch gekennzeichnet, dass** die beiden Einspannelemente (4) aus Scheiben (40) bestehen.

8. Teil aus Verbundwerkstoff nach Anspruch 7, **dadurch gekennzeichnet, dass** der Verbindungskörper (5; 50; 53) an jedem seiner Enden oder in deren Nähe ein Außengewinde (52) aufweist, während die Bohrung (41) jeder der Scheiben (40) ein Innengewinde (42) aufweist.

9. Teil aus Verbundwerkstoff nach Anspruch 5, **dadurch gekennzeichnet, dass** das Verbindungsmittel aus einem Einrast-, Niet-, Löt- oder Klebe-/Einrastverbindungsmittel besteht.

## Claims

1. Composite part (1; 2; 6) made from a composite constituted by a superposition of composite folds, each comprising reinforcement fibres (10) embedded in a resin (11), said part comprising a zone that comprises a bore (20), having an axis perpendicular to the planes of said folds, said part comprising
at said
zone serving for the transmission of a force, a reinforcement device (3) comprising, first, two elements (4) for holding said composite part (2) at said part or in the vicinity thereof, and, second, at least one linking body (5) that traverses said folds perpendicularly to the planes thereof via said bore (20), in order to connect said holding elements (4) which, by means of their holding, prestress the resin, by compressing said composite folds, said part being **characterized in that** the bore forms an eyelet designed to link with another part with a view to the transmission of a force exerted in the laying-up plane of the reinforcement fibres.

2. Composite part according to Claim 1, **characterized in that** the holding elements (4) consist of plates (40; 41) pierced with holes (43) allowing the passage of linking bodies (5; 50; 51), which consist of clamping means.

3. Composite part according to either of Claims 1 or 2, **characterized in that** the linking body (53) extends beyond the two holding elements (4; 40) externally in order to form attachment points (54) for the transmission of the force.

4. Composite part according to either of Claims 1 or 2, **characterized in that** the linking body (50) is tubular such that it can be traversed axially by a means for fixing to another part with a view to the transmission of the force.

5. Composite part according to Claim 3 or Claim 4, **characterized in that** the two holding elements (4; 40) are secured to the tubular body (52) by means of assembly means (52, 41) capable of withstanding the axial forces that tend to separate said two holding elements (4; 40).

6. Composite part according to Claim 6, **characterized in that** the assembly means consists of a screwed-type assembly means.

7. Composite part according to Claim 5 or Claim 6, **characterized in that** the two holding elements (4) consist of washers (40).

8. Composite part according to Claim 7, **characterized in that** the linking body (5; 50; 53) comprises, at each of the ends thereof, or in the vicinity of the latter, a screw thread (52) whilst the bore (41) of each of the washers (40) has an inside thread (42).

9. Composite part according to Claim 5, **characterized in that** the assembly means consists of a means of assembly by snap-fitting, by riveting, by brazing or by adhesive bonding/snap-fitting.
